# EUROPÄISCHE PATENTSCHRIFT

(11) **EP 0 525 612 B1**
(45) Veröffentlichungstag und Bekanntmachung des Hinweises auf die Patenterteilung: **26.06.1996**
(21) Anmeldenummer: 92112519.1
(22) Anmeldetag: 22.07.1992
(51) Int. Cl.: G05B 17/00, G09B 9/00

(54) **Steuerfeld einer industriellen Anlage mit einer speicherprogrammierbaren Steuerung**
Control board for an industrial plant with a programmable logic controller
Pupitre de commande d'un plan industriel avec un automate logique programmable

(30) Priorität: 30.07.1991 DE 4125176
(43) Veröffentlichungstag der Anmeldung: 03.02.1993
(73) Patentinhaber: INGENIEURBÜRO MEWES & PARTNER GmbH, D-16761 Hennigsdorf (DE)
(72) Erfinder: Mewes, Jürgen, O-1422 Henningsdorf (DE)
(74) Vertreter: Bauer, Wulf, Dr.

(56) Entgegenhaltungen:
- DE-A- 2 264 205
- DE-A- 3 150 075
- DE-A- 3 431 076
- US-A- 3 310 778
- US-A- 3 310 883

## Beschreibung

Die Erfindung bezieht sich auf ein Steuerfeld einer industriellen Anlage mit einer speicherprogrammierbaren Steuerung.

Unter dem Begriff Steuerfeld wird dabei derjenige Teil einer industriellen Anlage verstanden, über den ein Benutzer (Operator) Steueinformation erhält und Steuerbefehle eingeben kann. Das Steuerfeld wird häufig auch als Steuerpult bezeichnet. Es dient nicht der Eingabe von in der speicherprogrammierbaren Steuerung zu speichernden Befehlen, insbesondere dient es also nicht der Programmierung dieser speicherprogrammierbaren Steuerung. Das Steuerfeld ist vielmehr derjenige Teil einer funktionsfähigen industriellen Anlage (tatsächliche Anlage oder Funktionsmodell) der eingangs genannten Art, bei der die für den praktischen Ablauf der Anlage notwendigen Steuerschritte durchgeführt werden könnne, also beispielsweise Stop, Anfahren, Umkehr der Bewegungsrichtung langsamer/schneller usw. Das Steuerfeld ist mit praxisgerechten Steuerelementen, also beispielsweise Leuchtanzeigen, Schaltern usw. ausgerüstet, ihre Gröpe und Ausführung ist genormt. Über diese Steuerelemente steuert der Operator die industrielle Anlage.

Unter einer industriellen Anlage wird dabei eine beliebige Maschine, Schaltung oder Anlage zur Be- und/oder Verarbeitung verstanden, beispielsweise eine Wendeschützschaltung, eine Tauchbeschichtungsanlage, eine Transferstraße oder eine Werkzeugmaschine. Die Anlage kann beispielsweise elektrisch, hydraulisch und/oder pneumatisch angetrieben sein.

Es ist bekannt, die eigentliche Anlage durch Prozepmodelle zu symbolieren, hierfür wird ein Rechner (Personal Computer) eingesetzt, der mit einem entsprechenden Simulationsprogramm geladen ist. Ihm ist ebenso eine speicherprogrammierbare Steuerung zugeordnet, wie sie auch bei normalen, tatsächlichen Anlagen verwendet wird. Auf diese Weise gelingt die Darstellung von Prozeßabläufen, die in der Realität ablaufen würden, auf dem Monitor des Rechners. Auf diese Weise kann ein Operator für die Arbeit an der industriellen Anlage geschult werden, es können aber auch neue industrielle Anlagen entworfen und Kunden vorgestellt werden, ohne daß es mehr als eines Softwareaufwandes erforderte.

Bei den vorbekannten industriellen Anlagen dieser Art, wie Z.B. aus DE-A-3431076, bei denen ein Prozeßmodell durch einen Rechner simuliert wird, ist nachteilig, daß kein eigentliches, praxisgerechtes Steuerfeld vorgesehen ist. Die Eingabe von Steuerbefehlen, wie sie der Operator im praktischen Betrieb durchzuführen hat, erfolgt vielmehr über Schalter an der speicherprogrammierbaren Steuerung oder durch Unterbrechen von Verbindungen etc. Dies ist aber für einen didaktischen Zweck unzureichend und auch praxisfremd, denn die Zuordnung einzelner Maßnahmen zu einer Auswirkung im Prozeßmodell ist nicht einfach zu durchschauen und für einen Operator ist die Bedienung des Prozeßmodells praktisch nicht erlernbar.

Bei reell existierenden (tatsächlichen) industriellen Anlagen der eingangs genannten Art mit einer konkret als Hardware vorliegenden eigentlichen Anlage dagegen ist das Steuerfeld fest vorgegeben, es kann nicht geändert werden. Je nach Anforderungen und insbesondere bei Änderungen an der industrielle Anlage ist es jedoch wünschenswert, einzelne Steuerelemente anders zu gruppieren, entfallen zu lassen oder hinzuzufügen, um besser die Anlage steuern zu können.

Hier setzt nun die Erfindung ein. Sie hat es sich zur Aufgabe gemacht, ein Steuerfeld anzugeben, daß sowohl bei einer echten industriellen Anlage als auch (und sogar vorzugsweise) bei einem Prozeßmodell eingesetzt werden kann und jeweils eine flexible Anpassung an unterschiedliche Steueraufgaben ermöglicht, ohne daß eine mechanische Bearbeitung des Steuerfeldes erforderlich ist oder elektrische Anschlüsse arbeitsreich erstellt werden müssen.

Ausgehend von dem Steuerfeld der eingangs geannnten Art wird diese Aufgabe dadurch gelöst, daß das Steuerfeld unterteilt ist in einen Eingangsbereich, einen Feldbereich und einen Ausgangsbereich, daß der Eingangsbereich einen Eingangsverbinder aufweist, dessen einzelne Kontakte mit Ausgängen der speicherprogrammierbaren Steuerung elektrisch über Anschlußleitungen verbunden sind, daß der Ausgangsbereich einen Ausgangsverbinder aufweist, dessen einzelne Kontakte mit Eingängen der speicherprogrammierbaren Steuerung elektrisch über Anschlußleitungen verbunden sind, daß der Feldbereich unterteilt ist in eine Vielzahl von Einzelfeldern, die jeweils eine Vielfachsteckbuchse aufweisen, von denen einige Einzelbuchsen elektrisch an Kontakte des Eingangsverbinders und/oder einige Einzelbuchsen an Kontakte des Ausgangsverbinders angeschlossen sind, daß Module vorgesehen sind, die den Vielfachsteckbuchsen entsprechende Vielfachstecker für die mechanische und elektrische Verbindung mit einem Einzelfeld aufweisen und in denen jeweils mindestens ein praxisgerechtes Steuerelement, z. B. eine Anzeige, ein Schalter usw., untergebracht ist, das elektrisch mit Kontakten des Vielfachsteckers verbunden ist, und daß das Steuerfeld eine Basisplatte aufweist, die zumindest den Feldbereich ausbildet.

Erfindungsgemäß wird somit ein Steuerfeld vorgeschlagen, das nicht speziell für eine konkrete industrielle Anlage zugeschnitten ist, sondern universell einsetzbar ist und rasch an unterschiedliche Steueraufgaben angepaßt werden kann. Es eignet sich damit insbesondere für durch Prozeßmodelle realisierte industrielle Anlagen, bei denen nun erfindungsgemäß bei Umstellung der industriellen Anlage auf ein anderes Modell nicht nur die Software (normalerweise ohne erheblichen Aufwand) geändert wird, sondern entsprechend einfach auch der Aufbau und die Ausrüstung des Steuerfeldes geändert werden kann. Dabei wird erstmals für eine durch Prozeßmodell simulierte industrielle Anlage vorgeschlagen, ein Steuerfeld zu verwenden, wie es bei praktisch vorhandenen Anlagen bekannt ist. Bei praktisch vorhandenen Anlagen ist das Steuerfeld jedoch mechanisch und elektrisch vorgegeben, die einzelnen Steuerelemente haben ihren festen Platz und sind fest miteinander verdrahtet sowie fest mit den entsprechenden Eingängen und Ausgängen der speicherprogrammierbaren Steuerung fest verbunden. Demgegenüber schlägt die Erfindung jedoch ein Steuerfeld in Form eines Baukastens vor, bei dem die Eingänge und Ausgänge mit den entsprechenden Anschlüssen der speicherprogrammierbaren Steuerung wahlweise und rasch änderbar verbunden werden können und den Einzelfeldern des Feldbereichs in beliebiger Auswahl Steuerelemente zugeordnet werden können, wobei für die elektrische und mechanische Verbindung ein Einstecken eines Steuerelementes, das in Form eines Moduls vorliegt, genügt.

Für reale industrielle Anlagen kann mit Hilfe des erfindungsgemäßen Steuerfeldes die optimale Anordnung der Steuerelemente erprobt werden, es kann untersucht werden, welche Steuerelemente wirklich benötigt werden und welche nicht usw. Insgesamt kann somit ein optimales Steuerfeld erstellt werden. Vorzugsweise wird durch eine Folie, die lösbar mit der Basisplatte des Steuerfeldes verbindbar ist, die jeweilige Zuordnung der eingesteckten Module für einen Operator klar ersichtlich. Auf der Folie sind die einzelnen Steuerelemente durch Worte und Verbindungsstriche erläutert.

In der praktischen Ausbildung hat es sich als vorteilhaft erwiesen, das Steuerfeld in Form eines Pultes auszubilden. Die Eingangsverbinder und Ausgangsverbinder sind vorzugsweise baugleich und als einzelne Steckverbinder, beispielsweise Buchsen, oder vorzugsweise als Mehrfachsteckverbinder ausgeführt. So kann mit je einer normierten Anschlußleitung Eingangsbereich und Ausgangsbereich des Steuerfeldes mit der speicherprogrammierbaren Steuerung verbunden werden.

Die Vielfachsteckbuchsen der Einzelfelder sind vorzugsweise für jedes Einzelfeld identisch, so daß jedes Modul in jedes Einzelfeld gesteckt werden kann. Die Vielfachsteckbuchsen sind entweder in immer dergleichen geometrischen Anordnung angeordnete Buchsen oder eine Vielfachsteckbuchse. Sie sind entweder jeweils nur mit einigen Ausgängen und/oder Eingängen der speicherprogrammierbaren Steuerung verbunden, oder in einer bevorzugten Ausführung sind an der Vielfachsteckbuchse jeweils sämtliche Eingänge und Ausgänge, die zum Steuerpult geführt sind, abgreifbar.

Die in einer Weiterbildung vorgesehene Folie haftet vorzugsweise klebend auf der Oberfläche der Basisplatte des Steuerfeldes. Alternativ können für ihre Befestigung auch andere Vorrichtungen vorgesehen sein, beispielsweise Halteklemmen. Die Folie hat im Bereich der Vielfachsteckbuchsen Aussparungen, so daß durch sie ein Einstecken der Module nicht behindert wird. Für die Ausführung des Steuerfeldes als Lehrgerät ist es vorteilhaft einen Satz unterschiedlicher Folien für vorgegebene, vom Lernenden zu erstellende Steuerfelder vorzusehen, die auswechselbar auf die Oberfläche der Basisplatte gelegt werden können.

In einer besonders vorteilhaften Weiterbildung sind Steuerfeld und speicherprogrammierbare Steuerung in ein und demselben Gehäuse angeordnet. Dadurch ist es bei einem Aufbau der Gesamtanlage nicht mehr notwendig, die Verbindungsleitungen zu erstellen. Insbesondere aber hat man den Vorteil, daß die Signalparameter an den Übergangsstellen zwischen Steuerfeld und speicherprogrammierbarer Steuerung und speicherprogrammierbarer Steuerung und Steuerfeld nicht mehr von äußeren Bedingungen bestimmt sind, sondern hier Signalpegel verwendet werden können, wie sie gerade vorliegen. Dadurch werden Pegelumsetzung und Koppler eingespart. Die elektronischen Schaltungen für die Signalein- und -ausgabe werden dadurch wesentlich vereinfacht, auch der Leistungsverbrauch wird kleiner. Elektronische Elemente für Signalein- und -ausgabe können bei Bedarf den steckbaren Modulen zugeordnet werden. Diese Elemente werden also nur dann benötigt, wenn der Steckplatz belegt ist.

In einer Alternative hat es sich ebenfalls als sehr vorteilhaft erwiesen, die Signalübertragung zwischen Steuerfeld und speicherprogrammierbarer Steuerung durch serielle Schnittstellen abzuwickeln, wobei im selben Gehäuse wie das Steuerfeld eine serielle Schnittstelle angeordnet ist. Dadurch entsteht der Vorteil, daß bei Aufbau der Gesamtanlage wesentlich weniger Verbindungen erstellt werden müssen, daß an der speicherprogrammierbaren Steuerung keine Ein- und Ausgaben belegt werden und daß durch die direkte Verbindung zwischen Steuerfeld und elektronischer Signalwandlung eine Vereinfachung der Signalverstärkung und der Eingangssignalbildung möglich ist, wie dies im vorangegangenen Absatz auch für das Kombigerät beschrieben wurde.

Bei einem computergestützen Lernsystem für die Automatisierungstechnik ermöglicht es die Erfindung, das Steuerfeld jeweils rasch an die einzelnen Prozeßmodelle anzupassen. Dabei stehen vorbereitete Folien für die Steuerfelder von einzelnen Prozeßmodellen zur Verfügung. Hierdurch wird erspart, daß für jedes Prozeßmodell ein separates Steuerfeld angeschafft und vorrätig gehalten werden muß. Bei Änderung eines Prozeßmodells in ein anderes müssen die Anschlüsse zur speicherprogrammierbaren Steuerung nicht geändert werden, diese bleiben vielmehr bestehen. Geändert werden lediglich die Folie und einige oder alle Module.

Zwei Ausführungsbeispiele der Erfindung werden im folgenden näher beschrieben. Sie sind nicht einschränkend zu verstehen. Aus diesen Ausführungsbeispielen, sowie ihrer Beschreibung werden weitere Vorzüge und Merkmale der Erfindung deutlich, wie auch aus den übrigen Patentansprüchen. In der Zeichnung zeigen:
- Fig. 1: eine perspektivische Darstellung einer industriellen Anlage mit einem ein Prozeßmodell realisierenden Computer, einer speicherprogrammierbaren Steuerung und einem Steuerfeld in Pultform,
- Fig. 2: eine Draufsicht auf eine auswechselbare Folie mit Beschriftung und
- Fig. 3: ein Schnittbild durch ein Steuerfeld zur Erläuterung seines konstruktiven Aufbaus, dargestellt als Montagebild.

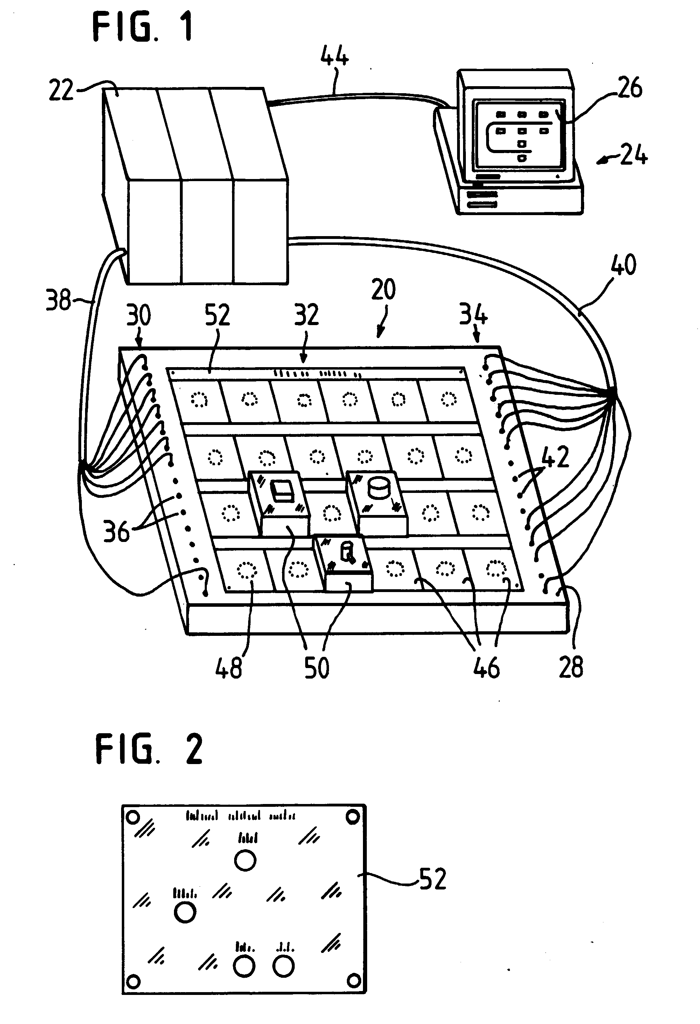

Eine industrielle Anlage gem. Fig. 1 und 2 in Form einer Transferstraße hat ein Steuerfeld 20, eine speicherprogrammierbare Steuerung 22 und einen Rechner 24, der die Transferstraße in Form eines Prozeßmodells realisiert. Zum Rechner 24 gehört ein Monitor 26, auf dessen Bildschirm die Transferstraße abgebildet ist. Auf dem Bildschirm laufen die Vorgänge ebenso ab wie auf einer tatsächlich vorhandenen Transferstraße, alle wichtigen Komponenten einer tatsächlichen Transferstraße sind durch Symbole dargestellt.

Das Steuerfeld 20 hat Pultform, die Oberseite des Pultes wird durch eine ebene, rechteckförmige Basisplatte 28 gebildet. Diese ist unterteilt in einen Eingangsbereich 30, einen Feldbereich 32 und einen Ausgangsbereich 34. Der Eingangsbereich 30 ist auf einem schmalen linken Streifen der Basisplatte 28 vorgesehen, der Feldbereich 32 nimmt die weitaus größte Fläche ein, der Ausgangsbereich ist ausführungsmäßig mit dem Eingangsbereich 30 baugleich und befindet sich auf einem rechten Seitenstreifen der Basisplatte 28.

Der Eingangsbereich 30 hat einen Eingangsverbinder 36, der im hier gezeigten Ausführungsbeispiel realisiert ist durch eine Linienanordnung von einzelnen Steckbuchsen, es sind beispielsweise zwanzig derartiger Buchsen vorgesehen. Sie können, wie dargestellt, durch einzelne Stecker kontaktiert werden, es ist aber auch in einer Weiterentwicklung möglich, Steckerleisten zu verwenden, die den Buchsen angepaßt sind. Ebenfalls ist es möglich, eine Vielfachbuchse zu verwenden, beispielsweise Buchsen, wie sie für Personal Computer häufig eingesetzt werden, insbesondere SUB-D-Buchsenleisten oder Steckverbinder nach DIN 41617. Über Verbindungsleitungen 38 sind die einzelnen Kontakte des Eingangsverbinders 36 mit Ausgängen der speicherprogrammierbaren Steuerung 22 verbunden.

Ebenso ist der Ausgangsbereich 34 angeschlossen. Auch hier ist, eine lineare Anordnung von Steckbuchsen vorgesehen. Über Verbindungsleitungen 40 ist der als Buchsenzeile ausgeführte Ausgangsverbinder 42 mit Eingängen der speicherprogrammierbaren Steuerung 22 verbunden. Der Rechner 24 ist seinerseits über eine Vielfachleitung 44 mit der speicherprogrammierbaren Steuerung 22 verbunden.

Im hier gezeigten Ausführungsbeispiel ist das Steuerfeld unterteilt in vier Zeilen mit jeweils sechs Einzelfeldern 46. Sie sind untereinander baugleich. Jedes Einzelfeld ist mit einer Vielfachsteckbuchse 48 ausgerüstet, im gezeigten Ausführungsbeispiel handelt es sich um Vielfachsteckbuchsen, wie sie für Röhren verwendet werden, beispielsweise Piko. Alternativ können auch andere Mehrfachsteckbuchsen, beispielsweise Centronics, verwendet werden. Die Vielfachsteckbuchse 48 dient der elektrischen und mechanischen Verbindung mit einem Modul 50. In Figur 1 sind drei derartiger Module 50 in jeweils ein Einzelfeld 46 gesteckt. Die Module 50 haben ein quaderförmiges Gehäuse aus Kunststoff, die obenliegende Frontplatte ist quadratisch und hat Abmessungen 70 x 70 mm, die Höhe beträgt ca. 40 mm. Das in der Zeichnung links befindliche Modul 50 ist mit einem Taster ausgestattet, das rechts oben liegende Modul 50 hat eine Anzeigeleuchte, das in der untersten Zeile befindliche Modul 50 ist mit einem Schalter versehen. Über diese Steuerelemente wird die auf dem Monitor 26 abgebildete Transferstraße gesteuert. Die gezeigten Steuerelemente sind nur beispielhaft angegeben.

Unterhalb der Basisplatte 28 sind einzelne Kontakte des Eingangsverbinders 36 elektrisch mit Kontakten der Vielfachsteckbuchse 48 verbunden, ebenfalls sind einzelne Kontakte des Ausgangsverbinders 42 elektrisch mit anderen Kontakten der Vielfachsteckbuchse 48 elektrisch verbunden. Auf diese Weise ist mindestens jeder Kontakt des Eingangsverbinders 36 elektrisch in einem Einzelfeld 46 zugänglich, gleiches gilt für jeden Kontakt des Ausgangsverbinders 42. Typischerweise kann bei allen Feldern eine Steuerspannung, beispielsweise plus zwölf Volt und Null abgegriffen werden. In einer Variante hat die Vielfachsteckbuchse so viele Buchsen wie unabhängige Kontakte am Eingangsverbinder 36 und am Ausgangsverbinder 42 vorgesehen sind, so daß sämtliche Kontakte dieser beiden Verbinder 36, 42 an der Vielfachsteckbuchse 48 abgegriffen werden können.

In einer Alternative können auch Module eingesetzt werden, deren Gehäuse die doppelte Gröpe der gezeigten Module 50 hat, wodurch sie Raum für größere Anzeigen bilden, beispielsweise eine Analoganzeige. Im gezeigten Ausführungsbeispiel grenzen in jeder Zeile die Einzelfelder 46 unmittelbar aneinander, zwischen den Zeilen sind jedoch schmale Streifen freigelassen, die Platz für eine Beschriftung bieten. In einer Alternative findet sich die Beschriftung auf der Frontplatte der Module 50.

Auf die Oberseite der Basisplatte 28 ist eine Folie 52 aufgelegt, sie kann entnommen werden, wenn alle Module 50 entfernt sind. Figur 2 zeigt eine Draufsicht auf eine derartige, im wesentlichen transparente Folie 52. Sie hat das Format des Feldbereichs 32. An den Stellen, an denen Module 50 aufgesteckt werden sollen, hat sie einerseits eine Beschriftung und andererseits eine Aussparung für die Vielfachsteckbuchse 48. Die Beschriftung kann im Einzelfeld 46 selbst sein oder außerhalb, beispielsweise im Streifen oberhalb des Einzelfeldes wie in Figur 1. Schließlich ist die Folie 52 noch markiert, sie hat eine Beschriftung "TRANSFERSTRASSE". In den Ecken sind Paßlöcher vorgesehen, die auf einen entsprechenden Vorsprung, der von der Basisplatte 28 vorspringt, passen. Dadurch kommen die Aussparungen exakt über den jeweiligen Vielfachsteckbuchsen 48 zu liegen.

Bei Übergang zu einer anderen industriellen Anlage, beispielsweise bei Übergang von einer Transferstraße zu einer Wendeschützschaltung, wird einerseits das Softwareprogramm in der speicherprogrammierbaren Steuerung 22 geändert, andererseits werden alle Module 50 und wird die Folie 52 für "TRANSFERSTRASSE" entfernt, daraufhin wird die Folie für die Wendeschützschaltung auf die Basisplatte 28 aufgelegt und diejenigen Module 50 gesteckt, die nun erforderlich sind. Zur Vereinfachung ist auf der Folie 52 an einer Stelle, die später von dem jeweiligen Modul 50 überdeckt wird, ein Hinweis enthalten, welches Modul einzustecken ist, beispielsweise 1A, 20 usw., siehe Figur 2.

In einer Weiterbildung, die insbesondere für tatsächlich realisierte industrielle Anlagen günstig ist, wird eine Zwischenplatte benutzt, die im wesentlichen das Format der Basisplatte 28 hat und eine Materialstärke aufweist, die etwa der Bauhöhe der Module 50 entspricht. Sie deckt Eingangsbereich 30 und Ausgangsbereich 34 vollständig ab, so daß die dortigen Verbindungen einerseits nicht mehr gelöst werden können und andererseits unsichtbar sind. Sie hat Aussparungen für die jeweils benötigten Module 50, so daß die Module rahmenartig eingefaßt werden. In einer vorteilhaften Ausgestaltung sind diese Aussparungen durch ausdrückbare Felder realisiert. Dadurch kann sich ein Anwender eine Zwischenplatte für einen konkreten Einsatzzweck ohne die sonst erforderlich, maschinelle Bearbeitung herstellen. Auf die Oberfläche der Zwischenplatte wird eine Beschriftung wie bei der Folie 52 aufgebracht. Die Zwischenplatte ist insoweit eine besondere Ausgestaltung der Folie 52 für dauerhafte Einsätze. Die Zwischenplatte wird über geeignete Mittel dauerhaft mit der Basisplatte 28 verbunden, beispielsweise verschraubt.

Eine Pultform für das Steuerfeld 20 - wie im Ausführungsbeispiel dargestellt - ist nicht notwendig, es können vielmehr auch andere Ausführungen vorkommen. Entscheidend ist lediglich, daß das Steuerfeld 20 eine Basisplatte 28 aufweist, in der die Einzelfelder 46 vorgesehen sind. So kann beispielsweise das Steuerfeld 20 auch durch eine Basisplatte 28 realisiert sein, die in einen Schrank eingebaut wird.

Als speicherprogrammierbare Steuerung 22 werden handelsübliche speicherprogrammierbare Steuerungen eingesetzt, beispielsweise die von der Anmelderin angebotene Steuerung Sydimat (geschützte Bezeichnung). Als Rechner 24 wird vorzugsweise ein AT Personal Computer eingesetzt. Der Monitor 26 ist vorzugsweise ein Farbmonitor.

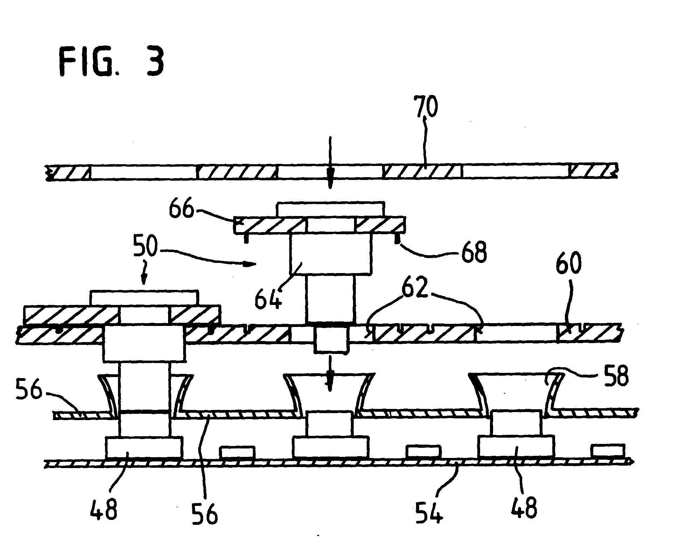

In Fig. 3 ist prinzipiell der Aufbau eines Steuerfeldes gezeigt, wie es sich insbesondere für industrielle Anwendungen eignet. Auf einer Grundplatte 54 sind Vielfachsteckbuchsen 48 und die erforderliche Elektronik angeordnet. Auf diese Grundplatte 54 wird eine Zwischenplatte 56 aufgelegt, sie deckt die Elektronik ab und bildet trichterförmige Führungen 58 oberhalb jeder einzelnen Vielfachsteckbuchse 48 aus, um eine Führung beim Stecken der Module 50 zu bewirken. Fig. 3 zeigt ein eingestecktes Modul 50 links, ein weiteres Modul 50 ist in der Mitte des Bildes dargestellt während des Einsteckens, die Einsteckrichtung ist durch einen Pfeil gekennzeichnet.

Oberhalb der Zwischenplatte 56 wiederum befindet sich eine Frontplatte 60, sie hat Bohrungen 62 zur mechanischen Aufnahme und Führung der Module 50, diese Bohrungen 62 sind im Rasterabstand angeordnet, wie er auch aus Fig. 1 ersichtlich ist. Die Module haben einen Trägerring 64, der jeweils der Bohrung angepaßt ist, wie für das links gezeigte Modul 50 aus Fig. 3 erkennbar ist. Die Module haben weiterhin eine Trägerplatte 66. Auf ihr befindet sich eine Beschriftung über die Funktion des Moduls, sie bewirkt weiterhin eine Abdichtung gegenüber der Frontplatte 60. In einer vorzugsweisen, in der Figur auch dargestellten Ausführung haben die Trägerplatten 66 nach unten vorspringende, im Rastermaß angeordnete Zapfen 68, die in entsprechende Sackbohrungen der Frontplatte 60 eingreifen.

Nach oben abgedeckt wird die Gesamtanordnung durch eine Abdeckplatte 70, die der Befestigung, der Abdichtung und dem Schutz der eingesetzten Module 50 dient. Die Module haben oberhalb der Trägerplatte 66 ein eigentliches Bedienfeld, dessen Dicke im wesentlichen der Dicke der Abdeckplatte 70 entspricht, so daß die Oberflächen bündig sind. Im Sprachgebrauch der Beschreibung zu Fig. 1 bilden die Platten 54, 56, 66 und 70 die Basisplatte 28.

## Patentansprüche

1. Steuerfeld einer industriellen Anlage mit einer speicherprogrammierbaren Steuerung (22), insbesondere eines durch einen Computer (24) realisierten Prozeßmodells einer industriellen Anlage mit einer speicherprogrammierbaren Steuerung (22), dadurch gekennzeichnet, daß das Steuerfeld (20) unterteilt ist in einen Eingangsbereich (30), einen Feldbereich (32) und einen Ausgangsbereich (34), daß der Eingangsbereich (30) einen Eingangsverbinder (36) aufweist, dessen einzelne Kontakte mit Ausgängen der speicherprogrammierbaren Steuerung (22) elektrisch über Anschlußleitungen (38) verbunden sind, daß der Ausgangsbereich (34) einen Ausgangsverbinder (42) aufweist, dessen einzelne Kontakte mit Eingängen der speicherprogrammierbaren Steuerung (22) elektrisch über Anschlußleitungen (40) verbunden sind, daß der Feldbereich (32) unterteilt ist in eine Vielzahl von Einzelfeldern (46), die jeweils eine Vielfachsteckbuchse (48) aufweisen, von denen einige Einzelbuchsen elektrisch an Kontakte des Eingangsverbinders (36) und/oder einige Einzelbuchsen an Kontakte des Ausgangsverbinders (42) angeschlossen sind, daß Module (50) vorgesehen sind, die den Vielfachsteckbuchsen (48) entsprechende Vielfachstecker für die mechanische und elektrische Verbindung mit einem Einzelfeld (46) aufweisen und in denen jeweils mindestens ein praxisgerechtes Steuerelement, z. B. eine Anzeige, ein Schalter usw., untergebracht ist, das elektrisch mit Kontakten des Vielfachsteckers verbunden ist, und daß das Steuerfeld (20) eine Basisplatte (28) aufweist, die zumindest den Feldbereich (32) ausbildet.

2. Steuerfeld nach Anspruch 1, dadurch gekennzeichnet, daß die Basisplatte (28) Oberseite eines pultförmigen Gehäuses ist.

3. Steuerfeld nach Anspruch 1 oder 2, dadurch gekennzeichnet, daß die Einzelfelder (46) untereinander baugleich sind.

4. Steuerfeld nach einem der Ansprüche 1 bis 3, dadurch gekennzeichnet, daß die Folie 52 durch eine Zwischenplatte realisiert ist, die Aussparungen für die Module (50) aufweist und eine Materialstärke hat, die der Höhe der Module (50) entspricht.

5. Steuerfeld nach einem der Ansprüche 1 bis 4, dadurch gekennzeichnet, daß die Module quaderförmige Gehäuse aufweisen.

6. Steuerfeld nach einem der Ansprüche 1 bis 5, dadurch gekennzeichnet, daß der Eingangsverbinder (26) und der Ausgangsverbinder (42) auf der Basisplatte (28) angeordnet sind.

7. Steuerfeld nach einem der Ansprüche 1 bis 6, dadurch gekennzeichnet, daß mehrere mehrere Folien(52) vorgesehen sind, die auf den Feldbereich (32) auflegbar sind und die Informationen über die Steuerelemente des Steuerfeldes (20) tragen.

8. Steuerfeld nach einem der Ansprüche 1 bis 7, dadurch gekennzeichnet, daß sich die speicherprogrammierbare Steuerung (22) in einem Gehäuse befindet, das auch das Steuerfeld (20) aufnimmt, so daß sich die Anschlußleitungen (38, 40) innerhalb dieses Gehäuses befinden und daß das Gehäuse einen Anschluß für eine Vielfachleitung (44) für einen Computer und einen Anschluß für eine Leistungselektronik aufweist.

9. Steuerfeld nach einem der Ansprüche 1 bis 7, dadurch gekennzeichnet, daß das Steuerfeld (20) in einem Gehäuse untergebracht ist, in dem auch eine serielle Schnittstelle für die Verbindung mit einer außerhalb des Gehäuses vorgesehenen, speicherprogrammierbaren Steuerung (22) angeordnet ist.

## Claims

1. Control board for an industrial plant with a programmable logic control unit (22), especially for a process model of an industrial plant, with a memory-programmable control unit (22), which is realised through a computer (24), characterized in that the control field (20) is partitioned in an input area (30), a field area (32) and an output area (34), that the input area (30) shows an input connection (36), whose single contacts are electrically connected with exits of the memory-programmable control unit (22) via connection cables (38), that the output area (43) shows an output connection (42), whose individual contacts are electrically connected with entries of the memory-programmable control unit (22) via connection cables (40), that the field area (32) is partitioned into a variety of individual fields (46), of which each show a multiple female plug connector (48) having single female plugs, some of which are electrically connected to contacts of the input connection (36) and/or some single female plugs are connected to contacts of the output connection (42), that modules (50) are provided, which show multiple male plug connectors cooperating with the multiple female plug connectors (48) for a mechanical and electrical connection with each field (46) and housing at least one real control element, e.g. a display, a switch etc., which is electrically connected to the pins of the multiple male plug connector, and that the control field (20) has a base plate (28), which at least forms the field area (32).

2. Control board according to Claim 1, characterized in that the base plate (28) is the upper side of a desk-shaped enclosure.

3. Control board according to Claim 1 or 2, characterized by the fields (46) being built the same.

4. Control board according to one of Claims 1 to 3, characterized in that the foil (52) is realised through an intermediate plate, which shows exemptions for the modules (50) and has a material thickness adapted to the height of the modules (50).

5. Control board according to one of Claims 1 to 4, characterized in that the modules show ashlar-shaped cases.

6. Control board according to Claims 1 to 5, characterized in that the input connection (26) and the output connection (42) are arranged on the base (28).

7. Control board according to one of Claims 1 to 6, characterized in that several foils (52) are provided, which are apt to be put on the field area (32) and which carry information about the control elements of the control board (20).

8. Control board according to one of Claims 1 to 7, characterized in thatthe memory programmable control (22) is enclosed in a case which also encloses the control field (20), so that the connection cables (38,40) are within this case and that the case shows a connection for a multiple connector line (44) of a computer and a connection for a power electronics.

9. Control board according to one of Claims 1 to 7, characterized in that the control field (20) is placed in a case, in which there is also supposed to be a serial interface for the connection to a memory programmable control unit (22) arranged outside of the case.

## Revendications

1. Tableau de commande d'une installation industrielle comportant une commande par programme enregistré (22), en particulier d'un modèle de processus d'une installation industrielle comportant une commande par programme enregistré (22), ledit modèle étant réalisé par un ordinateur (24), caractérisé en ce que le tableau de commande (20) est divisé en une zone d'entrée (30), une zone de champs (32) et en une zone de sortie (34), en ce que la zone d'entrée (30) présente un raccord d'entrée (36) dont les contacts particuliers sont reliés électriquement, par le biais de lignes de raccordement (38), avec des sorties de la commande par programme enregistré (22), en ce que la zone de sortie (34) présente de sa part un raccord de sortie (42) dont les contacts particuliers sont reliés de manière électrique, par le biais de lignes de raccordement (40), avec des entrées de la commande par programme enregistré (22), en ce que la zone de champs (32) est divisé en une multitude de champs individuels (46) qui présentent respectivement une fiche femelle multiple (48), dont quelques-unes des fiches individuelles sont reliées électriquement à des contacts du raccord d'entrée (36) et / ou quelques-unes des fiches individuelles sont reliées à des contacts du raccord de sortie (42), en ce que l'on prévoit des modules (50) qui présentent des fiches mâles multiples correspondant aux fiches femelles multiples (48) pour le raccordement mécanique et électrique avec un champ individuel (46), et dans lesquels du moins un élément de commande satisfaisant aux exigences de la pratique, tel qu'un display, un commutateur etc., est respectivement disposé, ledit élément étant relié de manière électrique à des contacts de la fiche mâle multiple, et en ce que le tableau de commande (20) présente une plaque de base (28) qui forme du moins la zone de champs (32).

2. Tableau de commande selon la revendication 1, caractérisé par le fait que la plaque de base (28) est la face supérieure d'un boîtier qui présente la forme d'un pupitre.

3. Tableau de commande selon la revendication 1 ou 2, caractérisé par le fait que les champs individuels (46) sont de construction pareille.

4. Tableau de commande selon l'une des revendications 1 à 3, caractérisé par le fait que la feuille (52) est réalisée par une plaque intermédiaire qui présente des évidements pour les modules (50) ainsi qu'une épaisseur qui correspond à la hauteur des modules (50).

5. Tableau de commande selon l'une des revendications 1 à 4, caractérisé par le fait que les modules présentent des boîtiers ayant la forme de parallélépipèdes rectangles.

6. Tableau de commande selon l'une des revendications 1 à 5, caractérisé par le fait que le raccord d'entrée (36) ainsi que le raccord de sortie (42) sont disposés sur la plaque de base (28).

7. Tableau de commande selon l'une des revendications 1 à 6, caractérisé par le fait que l'on prévoit plusieurs feuilles (52) qui peuvent être mises sur la zone de champs (32) et qui portent des informations sur les éléments de commande du tableau de commande (20).

8. Tableau de commande selon l'une des revendications 1 à 7, caractérisé par le fait que la commande par programme enregistré (22) se trouve dans un boîtier dans lequel est également logé le tableau de commande (20), de sorte que les lignes de raccordement (38. 40) se trouvent à l'intérieur de ce boîtier et que ledit boîtier présente un raccord pour une ligne multiple (44) pour un ordinateur ainsi qu'un raccord pour une électronique de puissance.

9. Tableau de commande selon l'une des revendications 1 à 7, caractérisé par le fait que le tableau de commande (20) est logé dans un boîtier dans lequel est disposé au-delà de ce fait un interface sériel destiné au raccordement avec une commande par programme enregistré (22) qui est prévue à l'extérieur du boîtier.
